# EUROPEAN PATENT APPLICATION

(11) **EP 0 542 055 A1**
(43) Date of publication of application: **19.05.1993**
(21) Application number: 92118574.0
(22) Date of filing: 30.10.1992
(51) Int. Cl.: C12G 1/02, A23B 7/04, A23L 3/375, F25D 3/11, F25D 29/00

(54) **Device for the controlled cooling of grapes before being subjected to pressing and/or stalk stripping**

(30) Priority: 12.11.1991 IT MI913007
(71) Applicant: SIO Srl, I-20148 Milan (IT); MARCHESI L. e P. ANTINORI S.p.A., I-50123 Firenze (IT); Milani, Bruno, I-35026 Conselve (Padova) (IT)
(72) Inventor: Cotarella, Renzo, I-05010 Monterubiaglio (Terni) (IT); Milani, Bruno, I-35026 Conselve (Padova) (IT); Luisoni, Mario, I-20094 Corsico (Milano) (IT)
(74) Representative: Giambrocono, Alfonso, Dr. Ing.

(57) **Abstract**

A device for the controlled cooling of grapes before being subjected to pressing and/or stalk stripping is applied to a machine (1) for conveying the grapes from a loading region to a region in which said pressing and/or stalk stripping are carried out, the machine being of the type comprising at least one storage zone (2), a metering zone (3) and a grape transporting zone (4).

The device comprises injector means (6) for directing cryogenic fluid onto said fruit during its transit within an injection zone, said injector means (6) being connected to an external cryogenic circuit (26), there being provided temperature sensor means (33) to measure the temperature within said injection zone, and operating and control means (34), connected to the temperature sensor means (33), to control the feed of the cryogenic fluid into the injection zone.

## Description

This invention relates to a device for the controlled cooling of fruit, in particular grapes, before being subjected to pressing and/or stalk stripping, the device being applied to a machine for conveying said fruit from a loading region to a region in which said pressing and/or stalk stripping are carried out, the machine being of the type comprising at least one storage zone, a metering zone and a fruit transporting zone.

The known problem exists of steeping the must with the skins at a controlled and preferably low temperature, In this manner, the contact between the must and the skins results in the must becoming enriched with aromatic substances, structure and other characteristics associated with and individual to the skins. This enrichment is achieved by effecting selective extraction on the skins by the must without the former transferring undesirable substances such as polyphenols to the latter.

In effecting this low temperature steeping, various methods are known for achieving the low temperature.

For example, one method of conducting this steeping consists of statically cooling the container carrying the steeped liquid. This method however results in non-uniformity of (low) temperature within the steeped liquid with consequent non-attainment of the results which the cooling was meant to achieve.

In addition, this cooling is attained after a relatively lengthy time, so prolonging the steeping time and resulting in non-optimum progress of the steeping process. This negatively affects the wine production costs.

A further known method is to firstly separate the must from the skins, then cool the must and again add it to the skins.

This method however requires a lengthy time and is of high cost. In addition it interrupts the usual cycle of operations involved in wine production, the cycle therefore becoming discontinuous leading to obvious operating problems.

It is also known to effect dynamic steepage (ie of the aforedescribed type) in an externally cooled container. This method achieves greater thermal efficiency of the operation than the aforedescribed, but the movement of the mass comprising the must and skins results in a loss of consistency of these latter and their transfer of undesirable substances such as polyphenols. Again in this case the time required for this method is high, resulting in the aforesaid drawbacks.

An object of the present invention is to provide a device which enables the must and skins to be steeped at low temperature (typically between 0°C and 15°C), without the process involving excessive cost or considerable idle time, hence enabling a continuous wine preparation cycle to be achieved, resulting in obvious process cost savings.

A further object is to provide a device which is of lower cost than known devices for effecting said low temperature steeping.

A further object is to provide a device which enables the grape quality to be preserved. A further object is to provide a device which enables said steeping to be conducted at different temperatures in a selective and controlled manner, independently of the initial grape temperature and on the basis of the grape quality.

A further object is to provide a device of the stated type which can be used not only for low temperature steeping of grapes but also for the treatment of any fruit to be subjected to fermentation.

These and further objects which will be apparent to the expert of the art are attained by a device of the stated type, characterised by comprising injector means for directing cryogenic fluid onto said fruit during its transit within an injection zone, said injector means being connected to an external cryogenic circuit, there being provided temperature sensor means to measure the temperature within said injection zone, and operating and control means, connected to the temperature sensor means, to control the feed of the cryogenic fluid into the injection zone.

The present invention will be more apparent from the accompanying drawing, which is provided by way of non-limiting example and in which:
Figure 1 is a side view, transparent for greater clarity, showing a machine provided with the device according to the invention;
Figure 2 is a front view of the machine of Figure 1, with some parts omitted for greater clarity;
Figure 3 is a view of the machine of Figure 1 from above; and

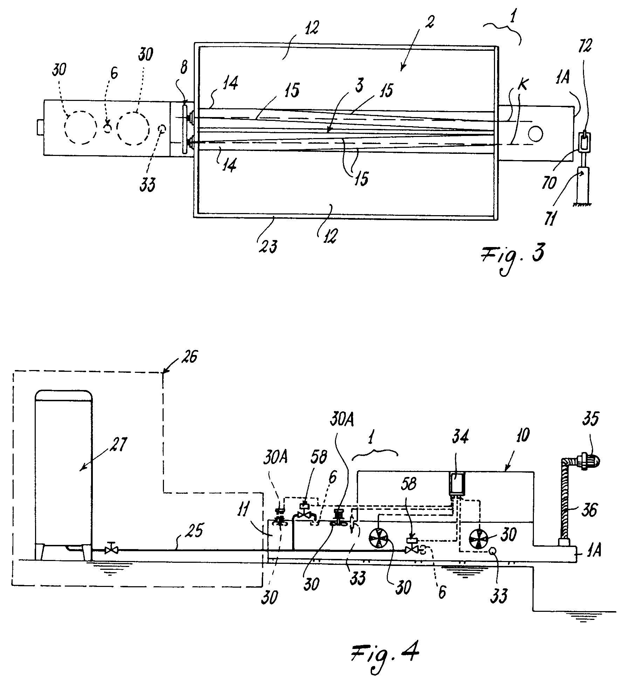

Figure 4 is a side view of a machine comprising the device of the invention.

With reference to said figures, a machine for conveying grapes from a loading region to a pressing and/or stalk stripping region is indicated overall by 1. This machine, of known type, comprises a storage zone 2, a metering zone 3 and a transporting zone 4.

At the transporting zone 4 there are provided means 6 for injecting or feeding cryogenic fluid into the machine 1 to cool the grapes present in this zone.

More specifically, the machine 1 comprises a structure 10 having a partly closed part 11 and a part open at the zone 2. This latter comprises inclined walls or chutes 12 for conveying the fruit towards the zone 3 by gravity.

At this latter there are usual metering members or rollers 14 comprising fins 15 arranged longitudinally on said rollers, which are of known characteristics and use. Usual motor means 8 drive the rollers 14 about their axis K.

The zone 4 is provided in the closed part 11 below the zone 3, and comprises two overlying mobile surfaces 16 and 17, of which the first 16 lies above but is shorter than the second.

Said surfaces 16 and 17 move about end rollers 19, 20, of which at least one is a drive roller. Usual motor members, not shown, drive the mobile surfaces, which are in the form for example of conveyor belts.

Injector means 6 are located in a first chamber 4A of the zone 4. further means 6 being located in a second chamber 4B of said zone.

The injector means 6 in the chamber 4A are a nozzle 21 positioned at the roof 28 of the closed part 11. The means 6 in the chamber 4B are nozzles 22 positioned at shoulders or walls 23 of said part 11, these latter nozzles being arranged substantially below the zone 3. The nozzles 21 and 22 are positioned as far as possible from the mouth or exit 1A of the machine 1 from which the grapes leave to be directed to further treatment such as pressing and/or stalk stripping.

The nozzles 21 and 22 are connected to a pipe 25 of a cryogenic circuit 26 comprising at least one tank 27 containing cryogenic fluid (such as carbon dioxide) under pressure.

In the embodiment shown in the figures, at the nozzles 21 and 22 there are provided fans 30 (driven by their own motors 30A) for atomizing the cryogenic fluid or carbon dioxide injected by the means 6 into the chambers 4A and 4B of the zone 4. The fans 30 also act as diffusers for diffusing the cryogenic fluid within said chambers to provide uniform temperature within them.

The temperature is controlled by providing temperature probes or sensors 33 connected to an electrical and/or electronic operating and control circuit for the machine 1, advantageously of microprocessor type.

At least one suction fan 35 is connected to the chamber 4A via a pipe 36 in order to draw from the zone 4 the utilized gas present in the closed part 11 of the machine 1, and hence prevent the creation in or adjacent to it of pockets of cryogenic gas (dangerous for the machine operators).

The use of the device is described hereinafter in relation to the known operation of the machine 1.

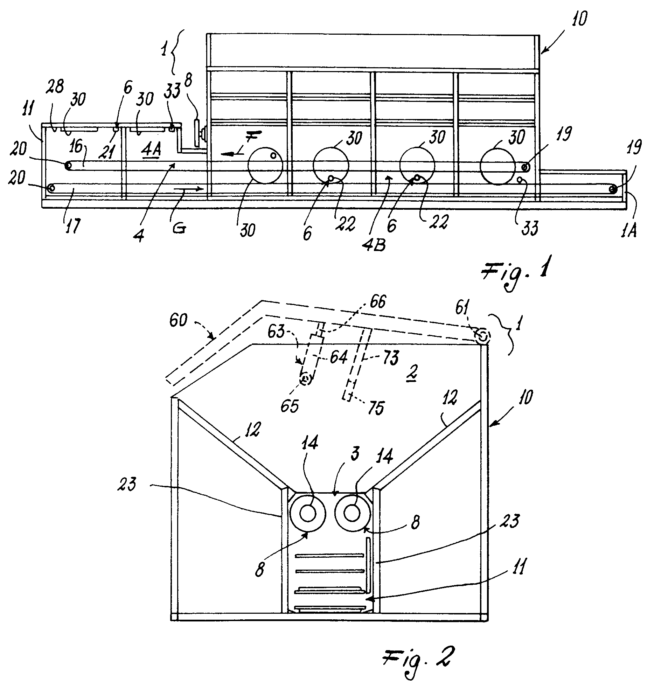

After the grapes have been fed into the machine via its loading zone 1, they pass in known manner into the zone 4 to reach the mobile surface or conveyor 16, which moves towards the chamber 4A of said zone (arrow F, Figure 1). From the surface 16, the grapes fall onto the surface 17, which moves away from said chamber (arrow G. Figure 1) to convey the fruit to the exit 1A of the machine 1.

During this movement the grapes are struck by the cryogenic fluid fed into the part 11 of the machine by the nozzles 21 and 22, with the result that they are cooled to a predetermined preferred temperature, for example 5°C.

The temperature of the environment within which the grapes move is controlled during the operation of the machine 1 via the probe 33. By this control, the temperature of each chamber 4A and 4B is maintained at a predetermined value such that at the exit 1A the grape temperature is at the required value (for example 5°C).

Specifically, having set or measured the temperature of the fruit fed to the machine 1 and having measured the temperature of the fruit at its exit 1A (manually or automatically), the circuit 34 maintains the temperature within the chambers 4A and 4B around a value which enables the exit fruit to achieve the required temperature.

This temperature measurement on the fruit entering and leaving the machine is effected preferably periodically so as to suitably adjust the temperature in the chambers 4A and 4B.

Specifically, the measured temperature, corrected on the basis of suitable comparison algorithms by the control circuit 34, is used by this latter to control the operation of the device according to the invention in order to maintain the grapes at the exit 1A at the required temperature. For example, by acting on the cryogenic circuit 26 in known manner (for example by acting on usual solenoid valves associated with the nozzles 21, 22), the circuit 34 can vary the fluid flow to the injectors, to vary the quantity of gas atomized and hence the temperature in each chamber 4A and 4B.

In this manner the circuit 34 can also vary the temperatures in these chambers relative to each other, for example to maintain the chamber 4A further from the metering zone 3 at a higher temperature (as it is a zone of lesser dispersion).

To improve the sealing of the machine 1 and in particular of its part 11, this latter is insulated by usual insulating panels for example of glass wool or the like (not shown).

In addition, to reduce heat transfer from the external environment, the machine 1 can be provided with a movable door 60 hinged at 61 to the structure 10 and arranged above the loading zone 2,

This door (see Figure 2) is operated by a hydraulic or pneumatic cylinder-piston unit (or similar member) 63 with its cylinder 64 hinged at 65 to the machine structure 10 and its mobile piston 66 connected to the door 60. The operation of this actuator can also be controlled by the circuit 34, which then enables gas to be fed into the structure 10 only when the door 60 has been closed onto it. This reduces heat dispersion to the outside of the machine to a minimum.

The circuit 34 can also automatically adapt the temperature of the chambers 4A, 4B (in the aforesaid manner) to measured variations in the temperature of the fruit present in the machine zone 2 and of the fruit at the machine exit.

For this purpose, at the exit there is provided a collection member 70 movable away from and towards said exit and connected to an actuator 71, for example a hydraulic actuator of known type. A temperature probe or sensor 72 is associated with the member 70.

A further temperature sensor 75 is associated with an arm 73 extending from the door 60.

Consequently after arranging the fruit in the storage zone 2, the door 60 is closed and the probe 75 penetrates into the fruit to measure its temperature and to feed corresponding electrical signals to the circuit 34,

With the operation of the machine 1, the fruit reaches the exit 1A where it is fed continuously to a stalk stripper and/or press. During this passage, part of the fruit is collected by the member 70 which for this purpose is moved by the actuator 71 (for example under the control of the circuit 34) into a position corresponding with said exit 1A.

When fruit has been collected in this member, the probe 72 measures its temperature and feeds corresponding electrical signals to the circuit 34 which then moves the member 70 away from the exit 1A so as not to interrupt the continuous movement of the fruit towards the stalk stripper and/or press.

Hence on the basis of the temperatures measured by the probes 72 and 75 this circuit acts on the cryogenic circuit 26 in such a manner as to achieve a temperature in the chambers 4A, 4B which enables the fruit to maintain a desired temperature at the exit 1A.

In addition, the circuit 34 is able to determine whether the machine 1 is operating properly by means of usual sensors positioned at the motors 30A of the fans 30, and/or at the injectors 6, and/or at the motors of the belts 16, 17, and/or at the suction fan 35 and/or at the metering rollers 14, and to halt the flow of cryogenic fluid whenever any of said elements develops a problem.

By means of a usual warning horn and/or lamp this problem is indicated to an operator who stops the machine and restores the initial correct operation of the defective element.

A particular embodiment of the invention has been described applied to a machine operating on grapes. However the invention can be applied to any machine operating on any type of fruit.

In addition any other known cryogenic fluid such as liquid nitrogen can be used in place of carbon dioxide.

Other embodiments of the invention are possible falling within the scope of the present document.

## Claims

1. A device for the controlled cooling of fruit, in particular grapes, before being subjected to procedures such as pressing and/or stalk stripping, the device being applied to a machine for conveying said fruit from a loading region to a region in which said procedures are carried out, the machine being of the type comprising at least one storage zone, a metering zone and a fruit transporting zone, characterised by comprising injector means (6) for directing cryogenic fluid onto said fruit during its transit within an injection zone, said injector means (6) being connected to an external cryogenic circuit (26), there being provided temperature sensor means (33) to measure the temperature within said injection zone, and operating and control means (34), connected to the temperature sensor means (33), to control the feed of the cryogenic fluid into the injection zone.

2. A device as claimed in claim 1, characterised in that the injector means (6) are nozzles (21, 22) connected to a pipe (26) of the external cryogenic circuit terminating in a cryogenic fluid tank (27).

3. A device as claimed in claim 2, characterised in that diffuser means (30) are positioned in correspondence with the injector means (6) to atomize the cryogenic fluid fed into the machine (1).

4. A device as claimed in claim 3, characterised in that the diffuser means are fans (30) operated by their own electric motors (30A).

5. A device as claimed in claim 1, characterised in that the injector means (6) are positioned in an injection zone coinciding with the transporting zone (4) of the machine (1), said zone being defined by a partly closed structure (11) connected to the storage zone (3), said injector means (6) being arranged in correspondence with the roof (28) of said transporting zone (4) and/or with its shoulders or walls (23).

6. A device as claimed in claims 1 and 5, characterised in that the temperature sensor means are probes (33) positioned in correspondence with the transporting zone (4) of the machine.

7. A device as claimed in claim 1, characterised in that the operating and control means are an electrical and/or electronic circuit (34).

8. A device as claimed in claim 7. characterised in that the operating and/or control circuit (34) is a microprocessor circuit.

9. A device as claimed in claim 7, characterised in that the control circuit (34) is connected to valve members (58) provided at the injector means (6), and controls the opening of said members (58).

10. A device as claimed in claims 3 and 7, characterised in that the control circuit (34) is connected to the diffuser means (30) and controls their operation.

11. A device as claimed in claim 5, characterised by comprising insulating panels arranged on those machine walls (28, 23) which bound the injection zone (4).

12. A device as claimed in claim 1, characterised by comprising suction means (35) connected to the cryogenic fluid injection zone (4).

13. A device as claimed in claim 1, characterised by comprising a movable door (60) to be closed onto the loading zone (2) of the machine (1) at least during the injection of cryogenic fluid into the machine (1).

14. A device as claimed in claim 1, characterised by comprising temperature sensor means (72, 75) to measure the fruit temperature at the entry and exit (1A) of the machine (1), said sensor means (72, 75) being connected to the operating and control means (34).

15. A device as claimed in claim 14, characterised in that the temperature sensor means (72) for measuring the fruit temperature at the exit (1A) of the machine (1) are a probe associated with a containing member (70) which can be moved relative to said exit.

16. A device as claimed in claims 14 and 15. characterised in that the temperature sensor means (75) for measuring the fruit temperature at the entry to the machine (1) are a probe associated with the movable door (60) and arranged to make contact with the fruit on closing said door (60).
